# EUROPÄISCHE PATENTSCHRIFT

(11) **EP 1 142 209 B1**
(45) Veröffentlichungstag und Bekanntmachung des Hinweises auf die Patenterteilung: **22.10.2003**
(21) Anmeldenummer: 99966806.4
(22) Anmeldetag: 01.12.1999
(51) Int. Cl.: H04L 12/40, B60R 16/02, H04L 12/10

(54) **VERFAHREN UND SYSTEM ZUM ÜBERTRAGEN VON DATEN IN EINEM KRAFTFAHRZEUG**
METHOD AND SYSTEM FOR TRANSMITTING DATA IN A MOTOR VEHICLE
PROCEDE ET SYSTEME POUR TRANSMETTRE DES DONNEES DANS UNE AUTOMOBILE

(30) Priorität: 21.12.1998 DE 19859178
(43) Veröffentlichungstag der Anmeldung: 10.10.2001
(73) Patentinhaber: SIEMENS AKTIENGESELLSCHAFT, 80333 München (DE)
(72) Erfinder: HERMANN, Stefan, D-93096 Köfering (DE); WAGNER, Ekkehart-Peter, D-93077 Bad Abbach (DE); SWART, Marten, D-93083 Obertraubling (DE)
(86) Internationale Anmeldenummer: DE9903809
(87) Internationale Veröffentlichungsnummer: WO00038372

(56) Entgegenhaltungen:
- EP-A- 0 522 244

## Beschreibung

Die Erfindung betrifft ein Verfahren und ein System zum Übertragen von Daten zwischen einer Satellitenstation und einer Zentralstation in einem Kraftfahrzeug.

Ein Datenübertragungssystem dieser Art ist aus EP-A-0 522 244 bekannt.

Bei Insassenschutzsystemen in Kraftfahrzeugen, wie Airbagsystemen oder Gurtstraffersystemen, sind in manchen Fällen zusätzlich zu einer eine Aufprallerkennung bewirkenden Zentralstation eine oder mehrere Satellitenstationen vorgesehen, die z.B. in Seitenbereichen des Kraftfahrzeugs angeordnet sind und dort eine Aufprallerkennung oder Unfall-Früherkennung bewirken. Solche Satellitenstationen übertragen bei Erkennen eines Aufpralls oder Unfallgefahrenzustands Daten zur Zentralstation, so daß diese geeignete Auslösemaßnahmen steuern kann. Die Satellitenstation kann auch so ausgelegt sein, daß sie in regelmäßigen Abständen Nachrichten (Lebenszeichen) zur Zentralstation überträgt.

In der älteren Anmeldung DE 197 33 866.6 ist ein Verfahren zum Übertragen von Daten in einem Kraftfahrzeug beschrieben, bei dem eine Satellitenstation über eine Datenübertragungsleitung mit einer Zentralstation verbunden ist. Zur Spannungsversorgung wird die Satellitenstation über die Datenübertragungsleitung mit einer kontinuierlichen Ruhespannung gespeist. Die von der Satellitenstation an die Zentralstation zu übertragenden Daten werden dem vorhandenen Ruhestrom der Satellitenstation in Form von Stromimpulsen überlagert. Das auf diese Weise erzeugte modulierte Stromsignal wird auf der Empfangsseite (Zentralstation) mit Hilfe eines Komparators, der den über die Datenübertragungsleitung fließenden Strom mit einem vorgegebenen Referenzwert vergleicht, wieder demoduliert und somit die ursprüngliche Impulsfolge wiederhergestellt.

Dabei entspricht der Ruhestrom der Satellitenstation einem Null-Pegel (Low-Pegel) und die Summe aus Ruhestrom und Impulsstrom einem positiven Pegel (High-Pegel). Aufgrund einer Bandbegrenzung, die eingesetzt wird, um Rausch- und sonstige Störeffekte zu unterdrücken, haben die überlagerten Stromimpulse keine exakte Rechteckform, sondern weisen Flanken mit endlicher Steilheit auf. Somit ist die Pulsweite des mit Hilfe des Komparators rückgewonnen Datensignals von der Lage des Referenzwerts abhängig.

Bisher war es üblich, den Referenzwert, der die Umschaltschwelle zwischen einem Low-Pegel und einem High-Pegel darstellt, als festen Wert vorzugeben. Da der Ruhestrom einer Satellitenstation aber abhängig von Fertigungstoleranzen und vom Betriebszustand starken Schwankungen unterliegt, führt ein fest vorgegebener Referenzwert zwangsläufig zu Schwankungen in der Pulsweite der übertragenen Signale und somit möglicherweise zu einer fehlerhaften Datenübertragung.

Der Erfindung liegt das technische Problem zugrunde, auch bei schwankendem Ruhestrom einer Satellitenstation eine zuverlässige Datenübertragung zwischen der Satellitenstation und einer Zentralstation in einem Kraftfahrzeug zu gewährleisten.

Dieses Problem wird erfindungsgemäß durch ein Verfahren mit den Merkmalen des Anspruchs 1 und durch ein Datenübetragungssystem nach Anspruch 7 gelöst. Vorteilhafte Weiterbildungen der Erfindung sind in den Unteransprüchen niedergelegt.

Erfindungsgemäß wird der Referenzwert als Summe aus einem regelbaren Basisanteil und einem vorgegebenen Impulsanteil gebildet. In Ruhestromphasen, also in Phasen, in denen keine Daten übetragen werden, wird der Basisanteil mit Hilfe einer Regelschaltung dem aktuellen Ruhestromwert nachgeführt. Auf diese Weise bleibt die Lage des Referenzwerts relativ zum Ruhestromwert stets konstant, so daß die Pulsweite des rückgewonnen Datensignals nicht mehr vom aktuellen Ruhestrom abhängt und somit eine fehlerfreie Datenübetragung gewährleiset ist.

Ein Ausführungsbeispiel der Erfindung wird im folgenden für ein Insassenschutzsystem anhand der Zeichnung erläutert. Die einzige Figur zeigt eine schematische Darstellung eines erfindungsgemäßen Datenübetragungssystems.

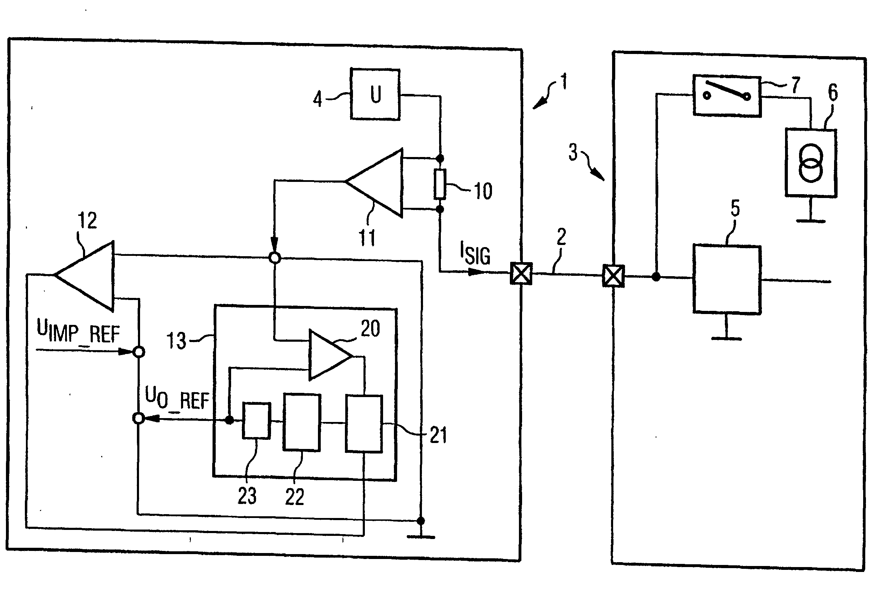

Eine Zentralstation 1 ist über eine Datenübertragungsleitung 2 mit einer Satellitenstation 3 verbunden. Die Zentralstation 1 und die Satellitenstation 3 bilden dabei, gegebenenfalls zusammen mit weiteren Satellitenstationen, ein Datenübertragungssystem in einem Kraftfahrzeug und steuern vorzugsweise ein Insassenschutzsystem, z.B. ein Airbagsystem oder ein Gurtstraffersystem. Die hierzu in der Zentralstation 1 erforderlichen Komponenten, wie Mikroprozessor, Speicher oder Ausgabeschnittstellen sind bekannt und in Figur 1 nicht dargestellt. In der Zentralstation 1 ist weiterhin eine Konstantspannungsquelle 4 angeordnet, durch den die Satellitenstation 3 über die Datenübertragungsleitung 2 unabhängig vom Stromverbrauch mit einer kontinuierlichen Ruhespannung versorgt wird. In der Satellitenstation 3 sind ebenfalls an sich bekannte, nicht gezeigte Komponenten, wie Sensoren oder Mikroprozessor, vorhanden. Zusätzlich ist innerhalb der Satellitenstation 3 ein Spannungsregler 5 vorgesehen, der eingangsseitig mit der Datenübertragungsleitung 2 verbunden ist und ausgangsseitig die Versorgungsspannung (z.B. 5 V) für die Komponenten der Satellitenstation 3 geregelt erzeugt.

Mit Hilfe eines parallel zum Spannungsregler 5 geschalteten Stromgenerators 6 und eines steuerbaren Schalters 7, der entsprechend den zu sendenden Daten durch eine nicht dargestellte Steuerschaltung gesteuert wird, werden Stromimpulse mit einer vorgegebenen Impulsstromstärke I_{IMP} generiert. Die Dateninformation ist dabei über die Impulsdauer codiert. Die Stromimpulse werden dann einfach dem über die Datenübertragungsleitung 2 fließenden Ruhestrom der Satellitenstation 3 überlagert. In der Zentralstation 1 ist zwischen der Spannungsquelle 4 und der Datenübertragungsleitung 2 ein Meßwiderstand 10 angeordnet. Die daran abfallende Signalspannung U_{SIG}, die proportional zu dem über die Datenübetragungsleitung 2 fließenden Signalstrom I_{SIG} ist, wird über einen Verstärker 11 einem ersten Komparator 12 zugeführt und durch diesen mit einer Referenzspannung U_{REF} verglichen. Die Referenzspannung U_{REF} wird dabei als Summe aus einem regelbaren Basisspannungsreferenzwert U_{0_REF} und einem vorgegebenen Impulsspannungsreferenzwert U_{IMP_REF} gebildet. Der Impulsspannungsreferenzwert U_{IMP_REF} ist vorzugsweise so festgelegt, daß er einem Spannungspegel entspricht, der am Ausgang des Verstärkers 11 durch einen Stromimpuls mit halber Impulsstromstärke hervorgerufen wird.

Ist die Signalspannung U_{SIG} kleiner als die Referenzspannung U_{REF}, so deutet das darauf hin, daß momentan keine Daten übermittelt werden und somit über die Datenübertragungsleitung 2 lediglich der Ruhestrom I₀ fließt. Am Ausgang des ersten Komparators 12 liegt in diesem Fall ein Low-Pegel an. Die Signalspannung U_{SIG} entspricht dann einem Spannungspegel der allein durch den aktuellen Ruhestrom I₀ hervorgerufen wird. Durch eine Regelschaltung 13, deren Eingänge einerseits mit dem Ausgang des Verstärkers 11 und andererseits mit dem Ausgang des ersten Komparators 12 verbunden sind, wird in solchen Ruhestromphasen, also so lange am Ausgang des ersten Komparators 12 ein Low-Pegel anliegt, der Basisspannungsreferenzwert U_{0_REF} der Signalspannung U_{SIG} nachgeführt.

Für derartige Regelschaltungen 13 sind eine Vielzahl von Reglerstrukturen bekannt. Bei einer bevorzugten Ausführungsform wird die Signalspannung U_{SIG} mit Hilfe eines zweiten Komparators 20 mit dem Basisspannungsreferenzwert U_{0_REF} verglichen. Über eine Logikeinheit 21 wird ein digitaler Zähler 22 gesteuert, durch den der Basisspannungsreferenzwert U_{0_REF} auf den Wert der Signalspannung U_{SIG} erhöht oder erniedrigt wird.

Die Regelgeschwindigkeit wird dabei über eine interne Taktfrequenz f_{TAKT} gesteuert. Über einen D/A-Wandler 23 wird das Ausgangssignal des Zählers in den analogen Basisspannungsreferenzwert U_{0_REF} umgesetzt.

Auf diese Weise wird der Basisspannungsreferenzwert U_{0_REF} dem aktuellen Ruhestrom I₀ der Satellitenstation 3 angepaßt. Dadurch ist sichergestellt, daß die Lage des Spannungsreferenzwerts U_{REF} relativ zu einer durch den Ruhestrom I₀ hervorgerufenen Basisspannung U₀ stets konstant bleibt, so daß eine fehlerfreie Umsetzung des Stromsignals in die ursprüngliche Impulsfolge durch den ersten Komparator 12 und somit eine zuverlässige Datenübertragung gewährleistet ist.

Bei sehr niedrigen Spannungsreferenzwerten U_{REF} ist es möglich, daß am Ausgang des ersten Komparators 12 dauerhaft ein High-Pegel anliegt, so daß der Basisspannungsreferenzwert U_{0_REF} nicht mehr nachgeführt wird. Um dies zu verhindern, wird in Impulsphasen, also wenn am Ausgang des Komparators 12 ein High-Signal anliegt, der Basisspannungsreferenzwert U_{0_REF} durch die Regelschaltung 13 langsam erhöht. Die Taktfrequenz des Zählers 22 wird dabei gegenüber der normalen Regelung, z.B. im Verhältnis 1/256, verringert.

Es ist auch möglich, Daten, z.B. Initialisierungsbefehle, von der Zentralstation 1 an die Satellitenstation 3 zu übertragen. Dabei werden die zu übertragenden Daten der vorhandenen Ruhespannung in Form von Spannungsimpulsen überlagert. In diesen Phasen wird die Regelschaltung 13 außer Betrieb gesetzt, so daß die momentane Regeleinstellung beibehalten wird.

Da das erfindungsgemäße Verfahren und das erfindungsgemäße Datenübetragungssystem nicht an funktionelle Eigenheiten oder räumliche Anordnungen der über eine Übertragungsleitung in Verbindung stehenden, räumlich voneinander getrennten Einheiten im Kraftfahrzeug gebunden sind, ist die Verwendung der Begriffe Zentralstation und Satellitenstation lediglich beispielhaft. Das erfindungsgemäße Verfahren kann z.B. ebenso zur Datenübertragung zwischen zwei ausgelagerten Steuergeräten verwendet werden.

## Patentansprüche

1. Verfahren zum Übertragen von Daten zwischen einer in einem Kraftfahrzeug angeordneten Zentralstation (1) und einer entfernt von der Zentralstation (1) im Kraftfahrzeug angeordneten Station (3), die mit der Zentralstation (1) über eine Datenübertragungsleitung verbunden ist, bei dem
- die Station (3) über die Datenübertragungsleitung (2) mit einer kontinuierlichen Ruhespannung gespeist wird,
- die Daten in Form von Stromimpulsen mit vorgegebener Impulsstromstärke, die einem Ruhestrom der Station (3) überlagert werden, übertragen werden,
- das Datensignal in der Zentralstation (1) mit Hilfe eines ersten Komparators (12), durch den der ankommende Signalstromwert mit einem Referenzwert verglichen wird, demoduliert wird, **dadurch gekennzeichnet, daß**
- der Referenzwert als Summe aus einem Basisanteil und einem vorgegebenen Impulsanteil gebildet wird, und
- der Basisanteil in Ruhestromphasen durch eine Regelschaltung (13) dem aktuellen Ruhestromwert nachgeführt wird.

2. Verfahren nach Anspruch 1, **dadurch gekennzeichnet, daß** der Impulsanteil der halben Impulsstromstärke entspricht.

3. Verfahren nach einem der vorhergehenden Ansprüche, **dadurch gekennzeichnet, daß** die Regelgeschwindigkeit der Regelschaltung (13) über eine Taktfrequenz gesteuert wird.

4. Verfahren nach einem der vorhergehenden Ansprüche, **dadurch gekennzeichnet, daß** die Regelschaltung (13) in Phasen, in denen Daten von der Zentralstation (1) an die Station (3) übertragen werden, außer Betrieb gesetzt wird.

5. Verfahren nach einem der vorhergehenden Ansprüche, **dadurch gekennzeichnet, daß** der Basisanteil in Impulsphasen durch die Regelschaltung (13) erhöht wird.

6. Verfahren nach einem der Ansprüche 3 oder 4, **dadurch gekennzeichnet, daß** die Taktfrequenz in Impulsphasen verringert wird.

7. Datenübertragungssystem zur Übertragung von Daten zwischen einer in einem Kraftfahrzeug angeordneten Zentralstation (1) und einer entfernt von der Zentralstation im Kraftfahrzeug angeordneten Station (3), das aufweist
- eine Datenübertragungsleitung (2) über die die Zentralstation (1) und die Station (3) miteinander verbunden sind,
- eine Konstantspannungsquelle (4) in der Zentralstation (1) zur Spannungsversorgung der Station (3),
- einen Stromgenerator (6) und einen steuerbaren Schalter (7) in der Station (3) zum Erzeugen von die zu übertragenden Daten repräsentierenden Stromimpulsen mit vorgegebener Impulsstromstärke, die einem Ruhestrom der Station (3) überlagert werden,
- einen ersten Komparator (12) in der Zentralstation (1) zum Vergleich des über die Datenübertragungsleitung (2) fließenden Signalstromes mit einem vorgegebenen Referenzwert,
**dadurch gekennzeichnet, daß** der Referenzwert als Summe aus einem Basisanteil und einem vorgegebenen Impulsanteil gebildet wird, und
- eine Regelschaltung (13) in der Zentralstation (1), durch die der Basisanteil in Ruhestromphasen dem aktuellen Ruhestromwert nachgeführt Wird.

8. Datenübertragungssystem nach Anspruch 7, **dadurch gekennzeichnet, daß** der Signalstrom mit Hilfe eines Meßwiderstands (10) aufgenommen wird.

9. Datenübertragungssystem nach einem der Ansprüche 7 oder 8, **dadurch gekennzeichnet, daß** die Regelschaltung (13) aufweist
- einen zweiten Komparator (20) zum Vergleichen des Basisanteils mit dem Signalstrom,
- einen digitalen Zähler (22) zum Erhöhen oder Erniedrigen des Basisanteils,
- eine Logikeinheit (21), über die der Zähler (22) abhängig von den Ausgangssignalen des ersten Komparators (12) und des zweiten Komparators (20) gesteuert wird, und
- einen D/A-Wandler (23) zum Umsetzen des Ausgangssignals des Zählers (22) in den analogen Basisanteil.

## Claims

1. Method for transmitting data between a central station (1) located in a motor vehicle and a station (3) located remotely from the central station (1) in the motor vehicle, which is connected to the central station (1) by a data transmission line (2), in which
- the station (3) is fed via the data transmission line (2) with a continuous idle voltage,
- the data is transmitted in the form of current pulses with a pre-specified power pulse current strength which are overlaid on an idle current of the station (3),
- the data signal in the central station (1) is demodulated with the aid of a first comparator (12) via which the incoming signal current value is compared with a reference value, **characterized in that**
- the reference value is composed as the sum of a basic component and a pre-specified pulse component and
- the basic component is adjusted to the idle current value in idle current phases by a regulation circuit (13).

2. Method in accordance with Claim 1, **characterized in that** the pulse component corresponds to half the power pulse current strength.

3. Method in accordance with one of the previous Claims, **characterized in that** the speed of regulation of the regulation circuit (13) is controlled via a clock frequency.

4. Method in accordance with one of the previous Claims, **characterized in that** the regulation circuit (13) is taken out of operation in phases in which data is transmitted from the central station (1) to the station (3)

5. Method in accordance with one of the previous Claims, **characterized in that** the basic component is increased by the regulation circuit (13) in pulse phases.

6. Method in accordance with one of Claims 3 or 4, **characterized in that** the clock frequency is reduced in pulse phases.

7. Data transmission system for transferring data between a central station located in a vehicle and a station (3)located remotely from the central station in the motor vehicle, with the following features
- a data transmission line (2) via which the central station (1) and the station (3) are connected,
- a constant voltage source (4) in the central station (1) to supply the station (3),
- a current generator (4) and a controllable switch (7) in the station (3) to generate the pulses representing the data to be transmitted with a specified power pulse current strength which is overlaid onto an idle current of the station (3),
- a first comparator (12) in the central station (1) to compare the signal current flowing via the data transmission line (2) with a specified reference value, **characterized in that** the reference value is formed as the sum of a basic component and a presepecified pulse component, and
- a regulation circuit (13) in the central station (1) through which the basic component in idle current phases is adjusted to the actual idle current value.

8. Data transmission system in accordance with Claim 7, **characterized in that** the signal current (10) is recorded with the aid of a measuring resistor.

9. Data transmission system in accordance with one of Claims 7 or 8, **characterized in that** regulation circuit (13) features
- a second comparator (20) to compare the basic component with the signal current
- a digital counter (22) to increase or decrease the basic component,
- a logic unit (21) via which the counter (22) is controlled, depending on the output signals of the first comparator (12) and the second comparator (20), and
- a D/A converter (23) to convert the output signal of the counter (22) into the analog basic component.

## Revendications

1. Procédé pour transmettre des données entre une station centrale (1) disposée dans un véhicule à moteur et une station (3) placée dans le véhicule à un endroit éloigné de la station centrale et étant reliée à la station centrale (1) par une ligne de transmission de données, dans lequel
- la station (3) est alimentée par la ligne de transmission de données (2) avec une tension continue de repos,
- les données sont transmises sous forme d'impulsions de courant ayant une intensité préétablie, superposées à un courant de repos de la station (3),
- le signal des données est démodulé dans la station centrale (1) à l'aide d'un premier comparateur (12) qui compare la valeur de l'intensité du courant d'arrivée avec une valeur de référence,
**caractérisé en ce que**
- la valeur de référence est formée par la somme d'une composante de base et d'une composante d'impulsion prédéterminée, et
- la composante de base est adaptée par un circuit de réglage (13) à la valeur actuelle du courant de repos dans des phases de courant de repos.

2. Procédé selon la revendication 1, **caractérisé en ce que** la composante d'impulsion correspond à la moitié de l'intensité du courant d'impulsion.

3. Procédé selon l'une des revendications précédentes, **caractérisé en ce que** la vitesse de réglage du circuit de réglage (13) est commandée par une fréquence de cycles.

4. Procédé selon l'une des revendications précédentes, **caractérisé en ce que** le circuit de réglage (13) est mis hors service pendant les phases dans lesquelles des données sont transmises depuis la station centrale (1) à la station (3).

5. Procédé selon l'une des revendications précédentes, **caractérisé en ce que** la composante de base est augmentée par le circuit de réglage (13) dans les phases d'impulsion.

6. Procédé selon l'une des revendications 3 ou 4, **caractérisé en ce que** la fréquence des cycles est diminuée dans les phases d'impulsion.

7. Système de transmission de données pour la transmission de données entre une station centrale (1) disposée dans un véhicule à moteur et une station (3) placée dans le véhicule à un endroit éloigné de la station centrale, comportant
- une ligne de transmission de données (2) reliant la station centrale (1) et la station (3),
- une source de voltage constant (4) dans la station centrale (1) pour alimenter la station (3) en courant,
- un générateur de courant (6) et un commutateur à commande (7) dans la station (3) pour générer des impulsions représentant des données à transmettre et ayant une intensité d'impulsion prédéterminée, ces impulsions étant superposées à un courant de repos de la station (3),
- un premier comparateur (12) dans la station centrale (1) pour comparer le courant de signaux circulant sur la ligne de transmission de données (2), avec une valeur de référence préétablie,
**caractérisé en ce**
- **que** la valeur de référence est formée par la somme d'une composante de base et d'une composante d'impulsion prédéterminée, et
- **qu'**un circuit de réglage (13) est disposé dans la station centrale (1) pour adapter dans des phases de courant de repos la composante de base à la valeur actuelle du courant de repos.

8. Système de transmission de données selon la revendication 7, **caractérisé en ce que** le courant de signal est récupéré à l'aide d'une résistance de mesure (10).

9. Système de transmission de données selon l'une des revendications 7 ou 8, **caractérisé en ce que** le circuit de réglage (13) comprend
- un second comparateur (20) pour comparer la composante de base avec le courant de signal,
- un compteur numérique (22) pour augmenter ou diminuer la composante de base,
- une unité de logique (21) commandant le compteur (22) en fonction des signaux de sortie du premier comparateur (12) et du second comparateur (20), et
- un convertisseur numérique-analogique (23) pour convertir le signal de sortie du compteur (22) en composante de base.
